# EUROPÄISCHE PATENTSCHRIFT

(11) **EP 1 493 554 B1**
(45) Veröffentlichungstag und Bekanntmachung des Hinweises auf die Patenterteilung: **21.01.2009**
(21) Anmeldenummer: 04013969.3
(22) Anmeldetag: 15.06.2004
(51) Int. Cl.: B32B 5/26, B32B 5/28, D06N 3/00, B32B 37/00

(54) **Verbundmaterial mit Kunststoffverbundmatrix, Verfahren zu deren Herstellung und deren Verwendung**
Composite material with plastic matrix, method for making it and use
Materiau composite avec une matrice en matiere plastique, procédé de fabrication et son utilisation

(30) Priorität: 03.07.2003 DE 10330099
(43) Veröffentlichungstag der Anmeldung: 05.01.2005
(73) Patentinhaber: Benecke-Kaliko AG, 30419 Hannover (DE)
(72) Erfinder: Vollbrecht, Michael, 31582 Nienburg (DE); Zürbig, Claus, Dr., 30163 Hannover (DE); Lohre, Bettina, 31226 Peine (DE); Nöll, Christian, 30629 Hannover (DE)
(74) Vertreter: Finger, Karsten

(56) Entgegenhaltungen:
- EP-A- 1 031 656
- DE-A- 2 629 704
- FR-A- 1 281 084
- GB-A- 1 105 483

## Beschreibung

Die Erfindung betrifft ein Verbundmaterial mit einer flexiblen Kunststoffverbundmatrix sowie einer darin eingebetteten textilen Trägerbahn gemäß Anspruch 1, ein Verfahren zur Herstellung eines solchen Verbundmaterials sowie dessen Verwendung.

Unter Verbundgebilde versteht man Gebilde aus Verbundwerkstoffen, die durch Kombination unterschiedlicher Materialien erhalten werden und deren chemische, physikalische und sonstige Eigenschaften die der Einzelkomponenten übertreffen. Zu den Verbundwerkstoffen werden neben den Textilverbundstoffen, den VließstofFen, den Schichtpressstoffen, d.h. ineinander durch Kleben oder Kaschieren verbundene Werkstoffe in Sandwichanordnung (z.B. Sperrholz, Verbundfolien und Laminate), auch Kunstleder gezählt. Unter Kunstleder wird ein mehrschichtiges flexibles Verbundgebilde verstanden, das ein Polymer in der Oberflächenschicht und ein Trägermaterial, insbesondere aus Textil, Vlies oder einem geschäumten Material, z.B. aus PVC, Polyolefin oder Polyurethan, umfasst. Die polymere Deckschicht ist für die Abrieb- und Stoßfestigkeit verantwortlich und bestimmt das Aussehen, während der Träger die Festigkeit und Dehnbarkeit erbringt. Als Beschichtungspolymere werden u.a. Polyurethane eingesetzt. Grundsätzlich werden ein- und zweikomponentige Beschichtungssysteme unterschieden.

Verbundmaterialien, die u.a. einen Textilstoff einbinden sind also im Stand der Technik bekannt. So betrifft die DE 39 07 453 A1 einen beschichteten Textilstoff, bestehend aus mindestens einer textilen Trägerbasis und mindestens einer äußeren flexiblen Gummioder Kunststoffschicht. Ein wesentliches Merkmal des bekannten beschichteten Textilstoffs ist die Ausbildung einer Polyimidschicht, die mit hoher Haftung an die jeweils benachbarte Schicht gebunden ist. Es ist bevorzugt, dass die Polyimidschicht durch Kleber an die benachbarte Schicht gebunden oder die benachbarte Schicht eine Gummischicht ist und die Polyimidschicht durch Vernetzung mit ihr verbunden ist. Des weiteren wird es als eine bevorzugte Ausgestaltung herausgestellt, dass auf einer Oberfläche der Trägerbahn eine Gummischicht von üblicher Stärke und auf der anderen Oberfläche eine dünne Gummischicht als Haftvermittler zur Polyimidschicht vorgesehen ist. Darüber hinaus wird in der DE 39 07 453 A1 ein Verfahren angegeben, nach dem die beschriebenen beschichteten Textilstoffe hergestellt werden. Danach wurde auf beiden Seiten einer (textilen) Trägerbahn eine Fluorkautschukmischung aufgebracht und getrocknet, dann auf mindestens einer Seite eine Polyimidschicht aufgebracht. Der derart beschichtete Textilstoff wird einer Vulkanisation unterworfen. Die angesprochene Polyimidschicht kann in Form einer Polyimidfolie auf die vorbeschichtete Trägerbahn aufgebracht werden. Sie kann aber auch im Rakel- oder Spritzverfahren aufgetragen werden. Vom Polyimid wird ausgeführt, dass es ein "kostenaufwendiges Material" ist. Wegen dessen hoher Reißfestigkeit soll ein billigeres Trägermaterial verwendet werden können. Daher soll eine erheblich längere Haltbarkeit des beschichteten Textilstoffs im Vergleich zu den bekannten gummierten Geweben erreicht werden. Der bekannte beschichtete Textilstoff kann verschiedenen Verwendungszwecken zugeführt werden. So soll er zur Herstellung von Schutzbekleidung, Abdeckplanen bzw. Planen geeignet sein.

Der besondere Nachteil des oben geschilderten Standes der Technik liegt in dem komplizierten Verfahren zur Herstellung des Verbundmaterials, insbesondere wenn eine Direktbeschichtung einbezogen ist. Besonderst nachteilig ist es hierbei, dass ein ungleichmäßiger Ausfall auftritt. Darüber hinaus treten Verklebungsprobleme, eine Schichtentrennung und auch unerwünschte Lufteinschlüsse in Erscheinung.

Der Erfindung lag daher die Aufgabe zugrunde, die Nachteile des geschilderten Standes der Technik zu beheben, insbesondere ein Verbundmaterial mit einer flexiblen Kunststoffverbundmatrix sowie einer darin eingebetteten textilen Trägerbahn vorzuschlagen, das vereinfacht hergestellt werden kann und wobei dieses auch als zweiseitig verwendbares verstärktes Kunstleder einsetzbar ist. Dieses Kunstleder soll optisch-textil und "Kunstleder", wasserdicht, reißfest und vernähbar sein

Erfindungsgemäß wird die bezeichnete Aufgabe dadurch gelöst, dass die Verbundmatrix auf einem vernetzten Polyurethan beruht, in die Polyurethan-Verbund matrix eine textile Trägerbahn aus einem Gewebe oder Gewirk integriert und auf mindestens einer Seite der Polyurethan-Verbundmatrix eine textile Dekorseite aus einem Gewebe ausgebildet ist.

Von besonderem Vorteil ist es, wenn die der textilen Dekorseite abgewandte Oberfläche der Polyurethan-Verbundmatrix genarbt ist. Zur Narbung ist noch auszuführen, dass diese in technischen wie auch modischen Strukturen über strukturierte Zwischenträger (Papier, Silikon oder dergleichen) ausgebildet werden kann.

Weiterhin ist es vorteilhaft, wenn auf der der (ersten) textilen Dekorseite abgewandten Oberfläche der Polyurethan-Verbundmatrix eine weitere textile Dekorseite ausgebildet ist. Hiermit wird erreicht, dass ein wasserdichter, flexibler, textiler Verbundstoff bzw. Bootspersenning dargestellt werden kann.

Im Rahmen der Erfindung lassen sich zwischen den einzelnen Schichten Haftschichten vorsehen, wobei es besonders vorteilhaft ist, dass sich zwischen mindestens einer textilen Dekorseite und der Polyurethan-Verbundmatrix eine Haftschicht befindet, insbesondere auf der Basis eines Polyurethans. Zweckmäßig ist es im allgemeinen, wenn die textile Trägerbahn in der Polyurethan-Verbundmatrix mittig angeordnet ist. Für die Haftschicht können übliche Kleber, Kleberkaschierungen und klebende Folien, wie Schmelzklebefolien, eingesetzt werden. Dauerhaft flächig verbindende Kleberschichten mit geringer Stärke, die die übrigen Schichten in ihren Eigenschaften und Charakteristika sowie die Verarbeitbarkeit des Fertigprodukts nicht beeinträchtigen, sind bevorzugt. Die ein- oder mehrlagige Kleberschicht ist bevorzugt nicht stärker als 0,2 mm. Ein- oder mehrlagige Haftkleberschichten in Form von Lösungsmittel- oder Dispersionsklebestoffen sind bevorzugt. Insbesondere werden Polyurethan-Klebstoffe wie 2-K-PUR-Systeme, verwendet.

Die textile Trägerbahn ist ein wesentlicher integrierter Bestandteil des erfindungsgemäßen Verbundmaterials. Sie gewährleistet die wünschenswerte Reißfestigkeit und Vernähbarkeit. Bei der Ausbildung der textilen Trägerbahn unterliegt die Erfindung keiner wesentlichen Einschränkung. Es ist im Hinblick auf die gestellten Anforderungen, insbesondere im Hinblick auf die Reißfestigkeit und Vernähbarkeit, zweckmäßig, wenn diese aus einem Gewebe oder Gewirk besteht. Die physikalischen Eigenschaften des Gewebes oder des Gewirkes, die mit Vorteil eingestellt werden können, bestehen darin, dass die Festigkeiten erhöht und die Dehnung begrenzt wird.

Diese Anforderungen werden dann erfüllt, wenn das Gewebe oder Gewirk aus synthetischen Fasern, insbesondere Fasern aus Polyestern, Polyamid oder Polyacrylnitril besteht.

Auch die textile Dekorseite besteht aus einem Gewebe, insbesondere in Form eines Flachgewebes, welches vorzugsweise aus Polyacrylnitril besteht. In Einzelfällen ist es wünschenswert, wenn die textile Trägerseite gefärbt ist, insbesondere schwarz. Im Hinblick auf die noch geschilderten vorteilhaften Anwendungen des erfindungsgemäßen Verbundmaterials ist es zweckmäßig, wenn die textile Trägerbahn und auch die textile Dekorseite knick- bzw. faltfähig und rollfähig sind. Diese Anforderungen sind dann erfüllt, wenn die integrierte Textilbahn in eine PUR-Masse eingebettet ist und die textile Dekorseite nicht zu tief in den Kaschierstrich eingelegt wird. Des weiteren ist bevorzugt, dass die textile Trägerbahn elektrisch leitfähig und/oder fungizid ausgebildet ist, dies kann beispielsweise dadurch geschehen, dass die textile Trägerbahn leitfähig bedampft wird oder leitfähige Fasern zum Einsatz gebracht werden und gegebenenfalls zusätzlich fungizid ausgerüstet wird.

Unter anwendungsbedingten Gesichtspunkten ist es vorteilhaft, wenn die textile Dekorseite mit einem Hydrophobierungsmittel, insbesondere in Form eines Fluorcarbonharzes imprägnier ist. Zweckmäßig ist es in Einzelfällen, auf mindestens einer der textilen Dekorseiten eine Deckfolie oder eine versiegelnde Lackschicht anzuordnen, um gegen Umwelteinflüsse, wie Staub etc., unempfindlicher zu sein.

An das erfindungsgemäße Verbundmaterial werden gewisse Anforderungen im Hinblick auf die Reißkraft gestellt. Diese wird im wesentlichen durch die textile Trägerbahn und/oder der textilen Dekorseite bestimmt. Es wird bevorzugt, wenn die Reißkraft, gemessen nach DIN 53331, größer als 500 N/5 cm, insbesondere größer als 700 N/5 cm ist, weil dann der Einsatz für Wetterschutz, Bootsplanen etc. gewährleistet ist.

Im Hinblick auf die später noch angesprochenen Verwendungsmöglichkeiten des erfindungsgemäßen Verbundmaterials werden zweckmäßigerweise verschiedene Eigenschaften eingestellt. So ist es von Vorteil, wenn das Brennverhalten nach FMVSS 302 bei Verwendung des erfindungsgemäßen Verbundmaterials im Kraftfahrzeugsektor kleiner als 100 mm ist, weil dann insbesondere der Einsatz als Verdeckstoff möglich ist. Darüber hinaus ist es bevorzugt, wenn die Farbechtheit (Reibechtheit) nach DIN 54021 (trocken/Oberstoff) gleich oder größer als 4, nach DIN 54002 (nass/Oberstoff) gleich oder größer als 4 und die Heißlichtechtheit nach DIN 75202/2 (Oberstoff) und DIN 54001 (Unterstoff) gleich oder größer als 4 ist und/oder die künstliche Bewitterung nach 1000 h gemäß DIN 53387 (Oberstoff) gleich oder größer als 4 ist.

Es hat sich gezeigt, dass das erfindungemäße Verbundmaterial, insbesondere wenn es für die später noch geschilderten Verwendungen herangezogen wird, vorzugsweise eine Stärke von 0,7 bis 5 mm, insbesondere etwa 0,7 bis 1,2 mm, aufweist. Wird der Wert von etwa 0,7 mm überschritten, dann ist das Verbundmaterial dicht, flexibel und zum Einsatz von "Planenstoffen" geeignet.

Wesentliches Merkmal der Erfindung ist es darüber hinaus, dass die Verbundmatrix auf einem vernetzten Polyurethan beruht, insbesondere auf der Basis eines vernetzten Polyurethans, das anhand eines reaktiven High-Solids-Polyurethans (PUR)-Systems gebildet ist. Es handelt sich um zweikomponentige Systeme, bei denen während des Polymerisierens das Molekulargewicht des Polymers mit einem Kettenverlängerer sukzessive aufgebaut wird. Diese Systeme stellen festkörperreiche, lösemittelarme Zusammensetzungen dar, die aus Gründen günstiger umweltfreundlicher Anwendungen in steigendem Umfange Verwendung finden. Bei der Verwendung eines High-Solids-Polyurethan-Systems sind gleichermaßen aliphatische und aromatische Isocyanate einsetzbar, die mit Polyhydroxyverbindungen zum entsprechenden Polyurethan umgesetzt werden.

Bei den zweikomponentigen Beschichtungssystemen handelt es sich um reaktive Mischungen, z.B. aus funktionalisierten Präpolymeren und Vernetzern mit geringen Anteilen an organischen Lösungsmitteln (< 5 bis 10%). Im Gegensatz zu den einkomponentigen Systemen polymerisieren diese "High-Solid-Systeme" unter den Verarbeitungsbedingungen und bilden so den Urethanfilm. Um eine ausreichend Topfzeit (Zeitspanne, in der ein Ansatz nach dem Mischen aller Bestandteile verarbeitbar bleibt) bei Raumtemperatur zu gewährleisten, werden Isocyanatkomponenten eingesetzt, deren endständige Isocyanatgruppen durch Blockierungsmittel (z.B. 2-Butanonoxidm reversibel) geschützt sind. Die chemische Reaktion läuft dann in zwei Schritten ab. Zunächst wird bei Temperaturen oberhalb 140°C das Blockierungsagens abgespalten und die freie NCO-Gruppe zurückgebildet. In einem zweiten Schritt reagiert die Isocyanatendgruppe mit dem Kettenverlängerer unter Erhöhung des Molekulargewichts. Auf diese Art baut sich das Molekulargewicht des Polymers bis zum Polyurethanfilm sukzessiv auf.

Die oben beschriebenen Isocyanate zur Herstellung der Polyurethane unterliegen keinerlei Beschränkung. Bevorzugt verwendete aliphatische Diisocyanate sind beispielsweise Hexamethylendiisocyanat, Isophorondiisocyanate, 1,4-Dicyclohexandiisocyanate sowie deren Gemische. Bevorzugt eingesetzte aromatische Diisocyanate sind 2,4-Toluylendiisocyanat, 2,2'-, 2,4'- und 4,4-Diphenylmethandiisocyanate, 4,4'-Diisocyanatdiphenylethan-(1,2), 1,5-Naphthylendiisocyanat und deren Gemische.

Die Auswahl der eingesetzten Polyhydroxyverbindungen ist erfindungsgemäß ebenfalls nicht besonders beschränkt. Diese können sowohl aliphatisch als auch aromatisch sein. Bevorzugte Polyhydroxyverbindungen sind Polyetherpolyole, wie Polyetherdiole, Polytetramethylenetherdiole, Polyesterpolyole, wie Ethandiolpolyadipat, 1,4-Butandiolpolyadipat, Ethandiolbutandiol-1,4-polyadipat, 1,6-Hexandiolneopentylglykolpolyadipat, Polycaprolactone, hydroxygruppenhaltige Polymere, wie Polyacetale, Poly(oxypropylen)glykole, Glykole dimerer Fettsäuren und Gemische derselben.

Die einkomponentigen Beschichtungsmassen werden als Lösungen (Festkörpergehalt etwa 20 bis 30%) in organischen Lösungsmitteln (z.B. DMF, 2-Propanol, Toluol) oder als Dispersionen (Festkörpergehalt etwa 20 bis 40%) verarbeitet. Nach dem Ausstreichen, z.B. auf einem Band, wie es in der DE-A-4422871 beschrieben ist, erfolgt die Filmbildung durch Verdampfen des Lösungsmittels im Trockenkanal. Durch Zugabe von langsam reagierenden polyfunktionellen Vernetzern (z.B. aliphatischen Polyisocyanate) können einkomponentige Polyurethane nachvernetzt werden, um die Eigenschaften, wie z.B. die Chemikalien beständigkeit, zu verbessern. Aufgrund des niedrigen Festkörpergehaltes eignen sich einkomponentige Polyurethanbeschichtungssysteme zum Aufbringen dünner Filme.

Besonders vorteilhaft ist es, wenn das erfindungsgemäße Verbundmaterial, wie es vorstehend geschildert wurde, nach einem Verfahren hergestellt wird, das dadurch gekennzeichnet ist, dass während des Vernetzens eines reaktiven Ausgangsmaterials des Polyurethans eine textile Trägerbahn, insbesondere der vorstehend beschriebenen Art, vollständig in das auf einen Hilfsträger applizierte Ausgangsmaterial der Polyurethanmatrix eingebracht und eine textile Dekorseite mit der sich vernetzenden Polyurethan-Schicht verbunden wird, sobald die innere Festigkeit eine gleichmäßige Einbettung ohne Massedurchschlag zulässt und danach die Polyurethan-Schicht ausreagiert wird. Die reaktiven Ausgangsmaterialien eines besonders geeigneten Polyurethans wurden bereits vorstehend im Zusammenhang mit einem "High-Solids-Polyurethan" beschrieben, worauf verwiesen sei.

An den Hilfsträger werden keine besonderen Anforderungen gestellt. Er hat lediglich dafür zu sorgen, dass gegebenenfalls die Oberflächenstruktur der Verbundmatrix ausgebildet wird.

Mit anderen Worten erfolgt vorzugsweise ein High-Solid-PUR-Beschichtung auf einen strukturierten Zwischenträger, bei dem eine textile Trägerbahn verfahrensbedingt in die Masse einsinkt und gleichzeitig mit strukturiertem Flachgewebe bzw. verflochtenem X-Körper (S+Z-Grad) verbunden wird.

Auch die textile Trägerbahn und die textile Dekorseite bzw. die textilen Dekorseiten wurden vorstehend bereits geschildert, worauf gleichermaßen verwiesen sei. Wichtig ist dabei, dass, sobald die textile Trägerbahn, insbesondere mittig, in das reaktive Ausgangsmaterial eines Polyurethans, insbesondere des High-Solids-Polyurethans, gezielt einsinkt, so dass sie in möglichst mittiger Anordnung in der später durch Vernetzung sich verfestigenden Polyurethanmatrix eingebunden ist. Die innere Festigkeit wird beispielsweise dadurch bestimmt, wie die Vernetzungsstruktur gebildet wird. In einem Vorversuch kann ohne weiteres festgestellt werden, welchen Grad die innere Festigkeit haben muß, damit die textile Trägerbahn durch gleichmäßiges Absenken bzw. durch gleichmäßige einseitige Einbettung optimal eingebunden wird, insbesondere ein Massedurchschlag unterbleibt. Zum Massedurchschlag ist noch auszuführen, dass er durch Temperatur, Katalysatoren und Verweilzeit beeinflußt werden kann. Es wird demzufolge dann, sobald die gleichmäßige einseitige Einbettung vollzogen ist, eine textile Dekorseite aufgebracht. Es schließt das vollständige Ausreagieren der Polyurethan-Verbundmatrix mit eingebundener textiler Trägerbahn statt. Dieses Ausreagieren bzw. Vernetzen lässt sich vorteilhaft dadurch steuern, dass Umluft und Temperatur sowie der Einsatz von Katalysatoren aufeinander abgestimmt werden.

Zwingend weist das erfindungsgemäße Verbundmaterial mindestens eine textile Dekorseite auf. Von Vorteil ist es, wenn man beispielsweise die Matrix in glatter Struktur einführt, um eine zweite textile Dekorschicht aufbringen zu können. Hierbei wird vorzugsweise die zweite textile Dekorschicht durch Kaschieren nach der Fertigstellung des Kunststoffverbundmaterials aufgetragen.

Wie vorstehend im Zusammenhang mit der Schilderung des erfindungsgemäßen Verbundmaterials bereits zum Ausdruck gebracht, kann zwischen den verschiedenen Schichten eine Haftschicht vorgesehen werden. Im vorliegenden Fall ist es von Vorteil, dass nach Ausbildung der Polyurethan-Verbundmatrix eine Haftschicht, insbesondere auf der Grundlage eines Polyurethans, auf eine oder beide Oberseiten des Polyurethan-Verbundmaterials aufgetragen wird und danach die jeweilige textile Dekorschicht in der oben geschilderten Weise aufgebracht wird.

Die Darstellung von Oberflächenstrukturen auf der Deck- oder Dekorseite kann in bekannter Weise erfolgen. So können dem Fachmann bekannte beliebige Technologien mit beliebigen Narben eingesetzt werden. Auch Le-Narben (Leder echt) sind möglich. Die Narbe kann durch Gießen oder auch durch Prägen, beispielsweise nach einem Negativziehverfahren, ausgebildet werden.

Mit dem Verfahren gemäß der Erfindung ist demzufolge die kostengünstige Produktion eines neuen fortschrittlichen Produktes möglich, wobei ein gleichmäßigerer Warenausfall ohne Direktbeschichtung und Durchschlag der Masse usw. eintritt. Es wird ein neuartiger Artikel erhalten, der bei Laptops, Handtaschen und Handytaschen und insbesondere als Abdeckrollo oder Verdeckstoff im Kraftfahrzeugbereich vorteilhaften Einsatz findet.

Die Erfindung soll nachfolgend anhand von Beispielen noch näher erläutert werden:

### Beispiel 1

Auf ein genarbtes Polyurethan-Papier werden etwa 30 bis 40 g/m² (fest) pigmentiertes Polyurethan mittels einer Streichrakel gestrichen. Bei einer Temperatur von 90 bis 140°C wird zu einem blasenfreien Film während der Zeitdauer von etwa 2 min getrocknet. Anschließend erfolgt ein Kühlen. Dann wird eine Schicht aus einem 2-Komponentenpolyurethan einer Stärke von etwa 450 g/m² auf den getrockneten pigmentierten Polyurethanfilm mit einem Streichmesser aufgetragen. Nach etwa 30 Sekunden wird das PES Trikot auf die nasse und hochviskose Polyurethan-Masse im Spalt kaschiert. Das Material wird anschließend bei einer Temperatur von etwa 150 bis 160°C während einer Zeitdauer von 2 bis 3 min vernetzt. Hierbei sinkt das PES-Trikot durch Viskositätsabfall der vernetzenden Polyurtethan-Masse vollständig in das 2-Komponenten Polyurethan ein. Nach Abkühlen werden etwa 30 bis 40 g/m² Polyurethan-Kaschiermasse aufgetragen. Das textile Dekorgewebe wird zukaschiert, der gesamte Verbund bei 150°C 2 bis 3 min lang getrocknet, abgekühlt und vom genarbten Papierträger getrennt. Die genarbte lederähnliche Dekorseite wird mit einem Schlusslack aus Polyvinylchlorid/Acrylat/Polyurethan in einer Gesamtstärke von 4 bis 8 g/m² mittels Rastertiefdruck gefinishet.

### Beispiel 2

Auf einen glatten Zwischenträger bzw. auf ein Trennpapier werden etwa 400 bis 500 g/m² "High-Solid-Polyurethan" gestrichen. Das gestrichene Polyurethan wird über eine beheizbare Trommel bei einer Trommeltemperatur von 180 bis 200°C geführt und über eine schwenkbare Kaschiereinrichtung mit einer 40-50 g/m² schweren textilen Rundstrickware aus PES-Garn so kaschiert, dass die Rundstrickware mittig im vernetzenden Polyurethan verankert wird. Nach Abkühlen werden 40-50 g/m² Polyurethan-Kaschierstrich gestrichen. Das textile Dekorgewebe wird kaschiert, bei 150°C 2 bis 3 min im Trockenkanal getrocknet und der Verbund gebildet. Danach wird der Verbund vom Zwischenträger getrennt und aufgewickelt. In einem weiteren Arbeitsschritt wird die der Textildekorseite abgewandten Seite mit etwa 30 g/m² Haftvermittler aus Polyurethan beschichtet und ein weiteres Textil aus Polyacrylnitril in dem Verbund verankert. Der Verbund wird weitervernetzt. Auf diese Weise steht ein zweiseitiges flexibles Textildekormaterial zur Verfügung.

## Patentansprüche

1. Verbundmaterial mit einer flexiblen Kunststoffverbundmatrix auf Basis eines Polyurethans sowie einer darin eingebetteten textilen Trägerbahn, **dadurch gekennzeichnet, dass** die Basis der Verbundmatrix ein vernetztes Polyurethan ist, in die Polyurethan-Verbundmatrix eine textile Trägerbahn aus einem Gewebe oder Gewirk integriert ist, sich auf mindestens einer Seite der Polyurethan-Verbundmatrix eine textile Dekorseite aus einem Gewebe befindet, die textile Trägerbahn und die textile Dekorseite knick- bzw. falt- und rollfähig sind und das Verbundmaterial eine Reißkraft, gemessen nach DIN 53331, von mehr als 500 N/5 cm aufweist.

2. Verbundmaterial nach Anspruch 1, **dadurch gekennzeichnet, dass** die der textilen Dekorseite abgewandte Oberfläche der Polyurethan-Verbundmatrix genarbt ist.

3. Verbundmaterial nach Anspruch 1 oder 2, **dadurch gekennzeichnet, dass** auf der der (ersten) textilen Dekorseite abgewandten Oberfläche der Polyurethan-Verbundmatrix eine weitere textile Dekorseite vorliegt.

4. Verbundmaterial nach Anspruch 3, **dadurch gekennzeichnet, dass** sich zwischen der Polyurethan-Verbundmatrix und der weiteren textilen Dekorseite eine Haftschicht befindet, insbesondere auf Basis eines Polyurethans.

5. Verbundmaterial nach mindestens einem der vorhergehenden Ansprüche, **dadurch gekennzeichnet, dass** die textile Trägerbahn in der Polyurethan-Verbundmatrix mittig angeordnet ist.

6. Verbundmaterial nach mindestens einem der vorhergehenden Ansprüche, **dadurch gekennzeichnet, dass** das Gewebe oder Gewirk aus synthetischen Fasern, insbesondere Fasern aus Polyester, Polyamid oder Polyacrylnitril, besteht.

7. Verbundmaterial nach mindestens einem der vorhergehenden Ansprüche, **dadurch gekennzeichnet, dass** die textile Dekorseite aus einem Gewebe in Form eines Flachgewebes besteht.

8. Verbundmaterial nach mindestens einem der vorhergehenden Ansprüche, **dadurch gekennzeichnet, dass** die textile Trägerbahn gefärbt ist, insbesondere schwarz ist.

9. Verbundmaterial nach mindestens einem der vorhergehenden Ansprüche, **dadurch gekennzeichnet, dass** es 0,7 bis 5 mm, insbesondere 0,7 bis 1,2 mm dick ist.

10. Verbundmaterial nach mindestens einem der vorhergehenden Ansprüche, **dadurch gekennzeichnet, dass** dessen Reißkraft, gemessen nach DIN 53331, größer als 700 N/5 cm ist.

11. Verbundmaterial nach mindestens einem der vorhergehenden Ansprüche, **dadurch gekennzeichnet, dass** die textile Dekorseite mit einem Hydrophobierungsmittel, insbesondere in Form eines Fluorkarbonharzes, imprägniert ist.

12. Verbundmaterial nach mindestens einem der vorhergehenden Ansprüche, **dadurch gekennzeichnet, dass** das Brennverhalten nach FMVSS 302 im Hinblick auf die Verwendung im Kraftfahrzeugsektor kleiner als 100 mm ist.

13. Verbundmaterial nach mindestens einem der vorhergehenden Ansprüche, **dadurch gekennzeichnet, dass** die Farbechtheit (Reibechtheit) nach DIN 54021 (trocken/Oberstoff) gleich oder größer als 4, nach DIN 54002 (nass/Oberstoff) gleich oder größer als 4 und die Heiß-Lichtechtheit nach DIN 75202/2 (Oberstoff) und DIN 54001 (Unterstoff) gleich oder größer als 4 ist und/oder die künstliche Bewitterung nach 1000 h gemäß DIN 53387 (Oberstoff) gleich oder größer als 4 ist.

14. Verbundmaterial nach mindestens einem der vorhergehenden Ansprüche, **dadurch gekennzeichnet, dass** die textile Trägerbahn und/oder die textile Dekorseite elektrisch leitfähig und/oder fungizid ausgebildet sind.

15. Verbundmaterial nach mindestens einem der vorhergehenden Ansprüche, **dadurch gekennzeichnet, dass** auf der textilen Dekorseite eine Deckfolie oder eine versiegelte Lackschicht angeordnet ist.

16. Verfahren zur Herstellung eines Verbundmaterials nach mindestens einem der vorhergehenden Ansprüche, **dadurch gekennzeichnet, dass** während des Vernetzens eines reaktiven High-Solids-Polyurethans (PUR-System) eine textile Trägerbahn aus einem Gewebe oder einem Gewirk vollständig in das auf einen Hilfsträger applizierte Ausgangsmaterial einer Polyurethan-Verbundmatrix eingebracht und eine textile Dekorseite aus einem Gewebe mit der sich vernetzenden Polyurethan-Schicht verbunden wird, sobald die innere Festigkeit eine gleichmäßige einseitige Einbettung ohne Massedurchschlag zulässt und danach die Polyurethan-Schicht ausreagiert wird.

17. Verfahren nach Anspruch 16, **dadurch gekennzeichnet, dass** nach Abzug der Verbundmatrix von dem Hilfsträger eine zweite textile Dekorschicht auf der der (ersten) textilen Dekorseite abgewandten Oberfläche der Verbundmatrix durch Kaschieren aufgetragen wird.

18. Verfahren nach Anspruch 17, **dadurch gekennzeichnet, dass** nach Abzug der Verbundmatrix von dem Hilfsträger und vor dem Auftragen der zweiten textilen Dekorschicht eine Haftschicht, insbesondere auf der Grundlage eines Polyurethans, auf die noch nicht mit einer textilen Dekorseite versehene Oberseite der Verbundmatrix aufgetragen wird.

19. Verwendung des Verbundmaterials nach mindestens einem der vorhergehenden Ansprüche 1 bis 15, als Abdeckrolle oder Verdeckstoff im Kraftfahrzeugsektor und zur Herstellung von Laptops, Handtaschen und Handy-Taschen.

## Claims

1. Composite material comprising a flexible plastic composite matrix based on a polyurethane and a textile support web embedded therein, **characterized in that** the composite matrix is based on a crosslinked polyurethane, a textile support web composed of a woven or knitted fabric is integrated into the polyurethane composite matrix, a textile decorative side composed of a woven fabric is situated on at least one side of the polyurethane composite matrix, the textile support web and the textile decorative side are bendable/foldable and rollable, and the composite material has a breaking strength, measured in accordance with DIN 53331, of more than 500 N/5 cm.

2. Composite material according to Claim 1, **characterized in that** the surface of the polyurethane composite matrix which is remote from the textile decorative side is grained.

3. Composite material according to Claim 1 or 2, **characterized in that** a further textile decorative side is present on the surface of the polyurethane composite matrix which is remote from the first textile decorative side.

4. Composite material according to Claim 3, **characterized in that** a bonding layer, in particular based on polyurethane, is present between the polyurethane composite matrix and the further textile decorative side.

5. Composite material according to at least one of the preceding claims, **characterized in that** the textile support web is arranged centrally within the polyurethane composite matrix.

6. Composite material according to at least one of the preceding claims, **characterized in that** the woven or knitted fabric consists of synthetic fibres, in particular fibres of polyester, polyamide or polyacrylonitrile.

7. Composite material according to at least one of the preceding claims, **characterized in that** the textile decorative side consists of a woven fabric in the form of a flat-woven fabric.

8. Composite material according to at least one of the preceding claims, **characterized in that** the textile support web is dyed black in particular.

9. Composite material according to at least one of the preceding claims, **characterized in that** it is 0.7 to 5 mm and in particular 0.7 to 1.2 mm in thickness.

10. Composite material according to at least one of the preceding claims, **characterized in that** its breaking strength, measured in accordance with DIN 53331, is greater than 700 N/5 cm.

11. Composite material according to at least one of the preceding claims, **characterized in that** the textile decorative side is impregnated with a hydrophobing agent, in particular in the form of a fluorocarbon resin.

12. Composite material according to at least one of the preceding claims, **characterized in that** the FMVSS 302 flammability rating for use in the automotive industry is less than 100 mm.

13. Composite material according to at least one of the preceding claims, **characterized in that** the colourfastness to rubbing, measured in accordance with DIN 54021 (dry/surface material) is equal to or greater than 4, and measured in accordance with DIN 54002 (wet/surface material) is equal to or greater than 4, and the colourfastness to light at elevated temperatures, measured in accordance with DIN 75202/2 (surface material) and DIN 54001 (subsurface material), is equal to or greater than 4 and/or the artificial weathering after 1000 h in accordance with DIN 53387 (surface material) is equal to or greater than 4.

14. Composite material according to at least one of the preceding claims, **characterized in that** the textile support web and/or the textile decorative side are electrically conductive and/or fungicidal.

15. Composite material according to at least one of the preceding claims, **characterized in that** a covering film or a coat of sealing lacquer is disposed on the textile decorative side.

16. Process for producing a composite material according to at least one of the preceding claims, **characterized in that** during the crosslinking of a reactive high-solids polyurethane (PUR system), a textile support web composed of a woven or knitted fabric is completely introduced into the polyurethane composite matrix starting material applied to an auxiliary support and a textile decorative side composed of a woven fabric is bonded to the crosslinking polyurethane layer as soon as the inner strength permits uniform one-sided embedding without strike-through of material and thereafter the polyurethane layer is fully reacted.

17. Process according to Claim 16, **characterized in that** after the composite matrix has been peeled off the auxiliary support, a second textile decorative layer is applied, by laminating, on the surface of the composite matrix which was remote from the first textile decorative side.

18. Process according to Claim 17, **characterized in that** after the composite matrix has been peeled off the auxiliary support and before the second textile decorative layer has been applied, a bonding layer, in particular based on a polyurethane, is applied to the top side of the composite matrix which has not as yet been provided with a textile decorative side.

19. Use of the composite material according to at least one of the preceding Claims 1 to 15, as a pull-down cover or as a convertible top material in the automotive industry and in the manufacture of laptops, handbags and portable-telephone bags.

## Revendications

1. Matériau composite comprenant une matrice composite plastique flexible à base d'un polyuréthane ainsi qu'une bande de support textile incorporée, **caractérisé en ce que** la base de la matrice composite est un polyuréthane réticulé, une bande de support textile composée d'une étoffe tissée ou d'une étoffe à mailles est intégrée dans la matrice composite de polyuréthane, un côté décoratif textile composé d'une étoffe tissée se trouve sur au moins un côté de la matrice composite de polyuréthane, la bande de support textile et le côté décoratif textile sont aptes à la flexion ou au pliage et à l'enroulage et le matériau composite présente une force de rupture, mesurée conformément à DIN 53331, de plus de 500 N/5 cm.

2. Matériau composite selon la revendication 1, **caractérisé en ce que** la surface de la matrice composite polyuréthane qui est éloignée du côté décoratif textile est grainée.

3. Matériau composite selon la revendication 1 ou 2, **caractérisé en ce qu'**un côté décoratif textile supplémentaire est présent sur la surface de la matrice composite de polyuréthane qui est éloignée du (premier) côté décoratif textile.

4. Matériau composite selon la revendication 3, **caractérisé en ce qu'**une couche d'adhésion se trouve entre le matériau composite de polyuréthane et le côté décoratif textile supplémentaire, en particulier à base d'un polyuréthane.

5. Matériau composite selon au moins l'une des revendications précédentes, **caractérisé en ce que** la bande de support textile est disposée de façon centrale dans la matrice composite de polyuréthane.

6. Matériau composite selon au moins l'une des revendications précédentes, **caractérisé en ce que** l'étoffe tissée ou l'étoffe à mailles est constituée de fibres synthétiques, en particulier de fibres de polyester, de polyamide ou de polyacrylonitrile.

7. Matériau composite selon au moins l'une des revendications précédentes, **caractérisé en ce que** le côté décoratif textile est constitué d'une étoffe tissée sous la forme d'une étoffe tissée plate.

8. Matériau composite selon au moins l'une des revendications précédentes, **caractérisé en ce que** la bande de support textile est colorée, et est noire en particulier.

9. Matériau composite selon au moins l'une des revendications précédentes, **caractérisé en ce qu'**il présente une épaisseur de 0,7 à 5 mm, en particulier de 0,7 à 1,2 mm.

10. Matériau composite selon au moins l'une des revendications précédentes, **caractérisé en ce que** sa force de rupture, mesurée conformément à DIN 53331, est supérieure à 700 N/5 cm.

11. Matériau composite selon au moins l'une des revendications précédentes, **caractérisé en ce que** le côté décoratif textile est imprégné d'un agent d'hydrophobisation, en particulier sous la forme d'une résine fluorocarbonée.

12. Matériau composite selon au moins l'une des revendications précédentes, **caractérisé en ce que** le comportement de combustion conformément à FMVSS 302 en ce qui concerne l'utilisation dans le secteur de l'automobile, est inférieur à 100 mm.

13. Matériau composite selon au moins l'une des revendications précédentes, **caractérisé en ce que** la solidité de la couleur (solidité au frottement) conformément à DIN 54021 (à sec/matière en surface) est supérieure ou égale à 4, et conformément à DIN 54002 (humide/matière en surface) est supérieure ou égale à 4, et la solidité à la lumière à chaud conformément à DIN 75202/2 (matière en surface) et à DIN 54001 (matière en dessous de la surface) est supérieure ou égale à 4 et/ou le vieillissement climatique après 1000 h conformément à DIN 53387 (matière en surface) est supérieur ou égal à 4.

14. Matériau composite selon au moins l'une des revendications précédentes, **caractérisé en ce que** la bande de support textile et/ou le côté décoratif textile sont conducteurs de l'électricité et/ou sont fongicides.

15. Matériau composite selon au moins l'une des revendications précédentes, **caractérisé en ce qu'**une feuille de recouvrement ou une couche de vernis scellée est disposée sur le côté décoratif textile.

16. Procédé de production d'un matériau composite selon au moins l'une des revendications précédentes, **caractérisé en ce que** durant la réticulation d'un polyuréthane réactif à teneur élevée en matières solides (Système PUR), une bande de support textile composée d'une étoffe tissée ou d'une étoffe non tissée est totalement introduite dans la substance de départ d'une matrice composite de polyuréthane, appliquée sur un support auxiliaire, et un côté décoratif textile composé d'une étoffe tissée est joint à la couche de polyuréthane réticulante dès que la résistance interne permet une incorporation uniforme d'un seul côté sans pénétration de matière et la couche de polyuréthane est ensuite entièrement mise à réagir.

17. Procédé selon la revendication 16, **caractérisé en ce qu'**après le retrait de la matrice composite du support auxiliaire, une deuxième couche décorative textile est appliquée sur la surface de la matrice composite qui est éloignée du (premier) côté décoratif textile par stratification.

18. Procédé selon la revendication 17, **caractérisé en ce qu'**après le retrait de la matrice composite du support auxiliaire et avant l'application de la deuxième couche décorative textile, une couche d'adhésion, en particulier à base d'un polyuréthane, est appliquée sur le côté supérieur de la matrice composite qui n'est pas encore pourvu d'un côté décoratif textile.

19. Utilisation du matériau composite selon au moins l'une des revendications 1 à 15 précédentes, en tant que store déroulant de recouvrement ou matériau pour décapotable dans le secteur de l'automobile et pour la production d'ordinateurs portables, de sacs à main et de housses pour téléphones portables.
